# EUROPEAN PATENT APPLICATION

(11) **EP 1 119 082 A2**
(43) Date of publication of application: **25.07.2001**
(21) Application number: 01100763.0
(22) Date of filing: 12.01.2001
(51) Int. Cl.: H01S 3/036

(54) **Cross-flow fan for discharge excited gas laser**

(30) Priority: 18.01.2000 JP 2000008968
(71) Applicant: USHIODENKI KABUSHIKI KAISHA, Chiyoda-ku, Tokyo 100-0004 (JP)
(72) Inventor: Minobe, Takeshi, Yokohama-shi, Kanagawa-ken (JP); Miyasu, Katuoki, Yokohama-shi, Kanagawa-ken (JP); Atushi, Moto, Yokohama-shi, Kanagawa-ken (JP)
(74) Representative: Tomerius, Isabel, Dr. Dipl.-Chem.

(57) **Abstract**

To provide a cross-flow fan that is ideal for use in an excimer laser device or fluoride laser device that is capable of high-speed rotation, that has high mechanical strength even at high-speed rotation and that does not suffer deformation, a rotating shaft is mounted passing through the center of cross-flow fan for a discharge excitation gas laser device. Use of the rotating shaft facilitates alignment of the rotating shaft and high-speed rotation is possible because the mechanical strength is raised. Furthermore, magnetic bearings can be used since misalignment does not develop. The flow velocity is not adversely affected even if a rotating shaft, as noted above, is utilized since a cross-flow fan for gas circulation in an excimer laser device is used under high-head, low-flow velocity conditions. Deformation due to shaft weight can be reduced since the weight of the rotating shaft can be lowered by providing a hollow section within the rotating shaft, and that increases the inherent oscillation frequency which permits still higher speeds.

## Description

### Background of the Invention

### Field of Invention

The present invention concerns a cross-flow fan for circulating gas between electrodes in a discharge excited gas laser, especially the structure of a cross-flow fan that is used at high-speed rotation, high total pressure (high head), low flow velocity.

### Description of Related Art

Enhancement of resolution is sought in projection exposure equipment with miniaturization and higher integration of semiconductor integrated circuits. For this reason, the contraction of the wavelength of exposure light emitted from an exposure light source has been promoted, and the adoption of excimer laser devices and fluoride laser devices that emit light having a shorter wavelength than that of conventional mercury lamps has commenced as the light source for semiconductor lithography.

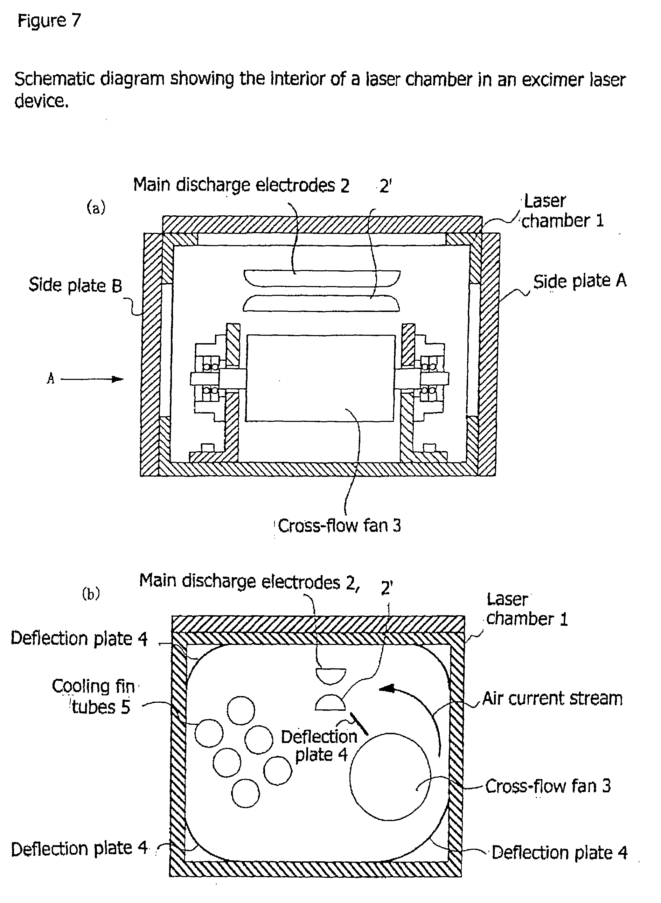

Figures 7(a) & 7(b) are schematic diagrams showing the interior of a laser chamber in an excimer laser device. Here, Figure 7(b) is a diagram viewed from direction A in Figure 7(a).

A pair of main discharge electrodes 2, 2' are mounted within laser chamber 1 of an excimer laser device facing each other at a prescribed separation extending in the direction of the laser light axis. Laser gas, such as fluorine (F₂) and argon (Ar) are enclosed at several hundred kPa within the laser chamber.

Laser gas, which is the laser medium, is excited by the development of discharge following imposition of a high-voltage pulse having a fast rise to the main discharge electrodes 2, 2'.

An output mirror (not illustrated) and a line-narrowing optical system (not illustrated) are disposed before and after laser chamber 1, respectively, and the line-narrowing optical system implements wavelength stabilization of the central wavelength and narrows the spectral width of the laser beam to avoid the problem of chromatic aberration in the exposure optical system of exposure equipment. The output mirror and the line-narrowing optical system comprise a laser resonator.

The light emitted from the windows (not illustrated) that are mounted in side plates A, B of laser chamber 1 when laser gas is excited is amplified by the laser resonator and emitted from the output mirror of the laser resonator as a laser beam.

High repetition rates at several kHz of discharge is demanded to increase the throughput of the excimer laser device that is used as the light source for exposure. However, thermal disturbance and acoustic disturbance (shock waves, etc.) occur in the main discharge space after main discharge occurs. The subsequent discharge becomes unstable if this state persists, and arc discharge occurs between the main electrodes which destabilizes laser output.

The gas in the main discharge space must be replaced before the subsequent discharge takes place to avoid such deficiencies. To this end, a cross-flow fan 3 and a deflection plate 4 are mounted within the laser chamber 1, as shown in Figures 7(a) and 7(b), and the laser gas within laser chamber 1 is circulated at high speed through along the path indicated by the arrow in Figure 7(b) to displace the gas between the main discharge electrodes 2, 2'. The gas passing through the main discharge electrodes 2, 2' is cooled by cooling fin tubes 5.

Cross-flow fan 3 is a hollow cylindrical fan with a plurality of blades disposed in the circumferential direction between round side plates. The fan rotates about the central axis of the blades which are mounted to the side plates at both ends and moves air. For the detailed characteristics of the cross-flow fan see, Takefumi IKUI, Masahiro INOUE, "Turbo Fan and Compressor", Corona Publishing Co. (First edition, August 25, 1978).

A cross-flow fan is commonly used as a ventilation fan for air conditioning equipment, as shown in the gazette of Japanese Kokai Publication Hei-9-105398. The use of a cross-flow fan to circulate gas between long and narrow electrodes in an excimer laser device is presented, for example, in U.S. Patent No. 5,870,420.

Incidentally, no structures of any kind had been desired within conventional cross-flow fans (for example, U.S. Patent No. 5,870,420). The reasons for that are as follows.

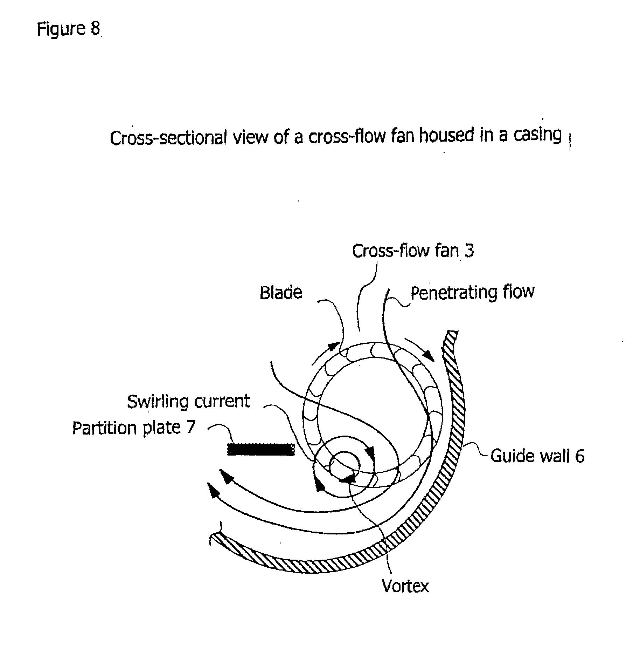

Figure 8 shows a cross-sectional view of a cross-flow fan housed in a casing (hereinafter abbreviated "fan"). The casing of cross-flow fan 3 comprises a guide wall 6 and a partition plate 7.

In Figure 8, a vortex develops near fan 3 when fan 3 rotates in the clockwise direction, and a swirling current due to this vortex as well as a penetrating flow along guide wall 6 and partition plate 7 are formed.

The air volume of the penetrating flow increases as the swirling current increases; but, if a hollow structure is not present within fan 3, formation of the aforementioned swirling current would be adversely affected and both the air volume and the efficiency (efficiency = total pressure power/axial power) would decrease. Accordingly, a rotating shaft is usually not mounted within a cross-flow fan.

When a rotating shaft is mounted within a fan, as stated on p. 303 of the above-mentioned "Turbo Fan and Compressor" publication as well, no problem would arise if d/D ≤ 0.07, wherein the diameter of the rotating shaft is d and the outer diameter of the fan is D.

An excimer laser and a fluoride laser are pulse lasers in which the repetition rate is about 1 kHz. In recent years, excimer laser devices or fluoride laser devices have come to be used as the light source of steppers, devices for semiconductor exposure. The repetition rate should be raised (to 2 kHz to 3 kHz or more) to stabilize the amount of exposure light and to elevate the throughput so that the excimer laser pulse emission or fluoride laser pulse emission approaches continuous emission.
The above-mentioned repetition rate is raised by reducing the interval of the discharges between the electrodes. Following discharge, density unevenness develops due to uneven temperature, the molecular excitation state and molecular ionization between electrodes. Upon transit to the next discharge with these states persisting, arc discharge occurs more readily, and uniform glow discharge cannot take place so that the output unstable.

Accordingly, gas in the discharge section following the end of discharge (between the electrodes) must be rapidly replaced by fresh gas and the gas flow velocity must be raised. Consequently, the cross-flow fan for gas circulation used in excimer laser devices or fluoride laser devices must rotate at high speed.

For example, the flow velocity of gas that must pass between electrodes is about 10 m/s in a conventional excimer laser device for exposure whose repetition rate is 1 kHz, although this varies with the internal structure of the laser chamber (separation between electrodes, position of the pre-ionization means (not illustrated), etc.). The fan rotational speed to obtain such a flow velocity would be about 1000 rpm.

The flow velocity of gas that must be circulated between electrodes would be about 20 to 30 m/s in an excimer laser device whose repetition rate is 2 kHz to 3 kHz, and the fan rotational speed required to attain such a flow velocity would have to be about 2000 to 3000 rpm. Furthermore, the fan rotational speed would have to be about 4000 rpm if the repetition rate were 4 kHz, although that varies with the channels that are formed.

The following problems arise if a cross-flow fan rotates at such high speeds.

A load would be imposed on the bearings which would bring about severe wear if the rotating shaft is misaligned. Accordingly, the bearings would vibrate, and that vibration would be transmitted to the laser chamber, which would induce vibration of the laser device. Consequently, the central wavelength of oscillation light would fluctuate and the optical axis would shift. Finally, vibration of the laser device would be transmitted to the exposure device, thereby inducing further problems.

There are two causes of such misalignment in aforementioned rotating shaft, "misalignment during fan production" and "misalignment due to insufficient rigidity during high-speed rotation".

### (1) Misalignment during fan production

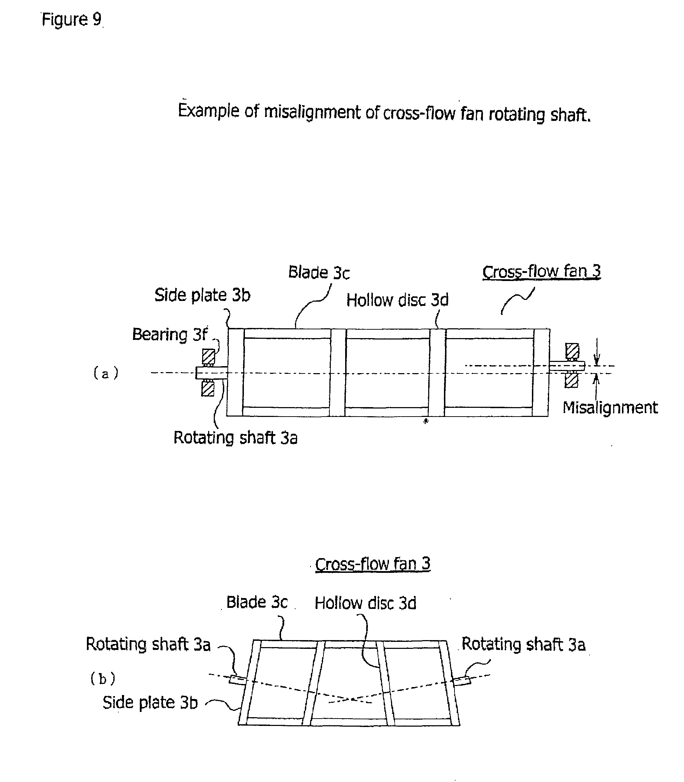

Figures 9(a) & 9(b) show examples of misalignment of cross-flow fan rotating shaft. These views show a cross-sectional view in the longitudinal direction of the fan.

Rotating shaft 3a of fan 3 is mounted as the shaft projection through a side plate 3b on both sides of fan 3, as shown in Figure 9(a). Both side plates are positioned by ventilation blade 3c and hollow disc 3d that supports the blade.

In such a structure, precise alignment of the rotational center of the projecting rotating shaft at both side plates during fan production is difficult. Minute misalignment develops in the rotating shafts as in Figure 9 (a) and Figure 9 (b).

### (2) Misalignment due to insufficient rigidity during high-speed rotation

The following three forces act on the rotating shaft during rotation of fan 3.
[1] Deformation due to fan weight.
[2] Unevenness of centrifugal force due to the weight of parts of the fan and to other differences.
[3] Reaction force arising in the fan during ejection of air.

The cross-flow fan comprises side plate 3b, blades 3c and hollow disc 3d only, as mentioned above, and therefore has limits to its mechanical strength.

Laser gas comprising more than 90% neon (Ne) is sealed within the laser chamber, especially at pressure of about 400 kPa (4 atmospheres). Accordingly, the reaction force created by the fan during the ejection of air becomes greater than atmospheric pressure, and that leads to still more severe conditions for the fan structure.

The inventors conducted various experiments using conventional cross-flow fans and discovered that the mechanical strength of the fan cannot bear the forces mentioned above when the speed of rotation of a cross-flow fan reaches high speeds (for example, 4000 rpm or more). This leads to overall structural deformation of the fan which increases misalignment of the rotating shaft and that, in turn, increases vibration of the fan.
As vibration of the fan increases, that vibration is transmitted to the laser chamber, causing the laser device to vibrate, as mentioned above, and that brings about deviation in the optical axis and fluctuation in the central wavelength of oscillated light.

On the other hand, the excimer laser device or fluoride laser device has a structure in which high pressure is applied between narrow discharge electrodes 2, 2', as shown in aforementioned Figure 7, to circulate an air current. The conditions of use of a cross-flow fan are such that the total pressure is high (high head) while the flow velocity is low. This is contrary to the conditions of use in air-conditioners, etc., (i.e., low head and high flow velocity are commonly required in air-conditioners). Specifically, the conditions of cross-flow fan use differ completely between air-conditioners and excimer laser devices or fluoride laser devices so that efficient gas circulation cannot necessarily be accomplished even if cross-flow fans used in conventional air-conditioners are used unchanged for gas circulation in excimer laser devices.

### Summary of the Invention

The present invention was devised in light of aforementioned conditions. The purpose is to provide a cross-flow fan that does not need an alignment of the rotating shaft when manufacturing and that is capable of high-speed rotation and that is ideally used in excimer laser devices and that does not suffer deformation even at high-speed rotation because of its great mechanical strength.

The inventors have conducted various experiments, the results of which revealed that the flow velocity is not adversely affected under high-head, low-flow-rate use conditions if a rotating shaft of diameter d is mounted in a cross-flow fan such that d/D ≥ 0.07 (d: diameter of rotating shaft, D: fan outer diameter).

In addition, rotating shaft diameter d exceeding d/D ≥ 0.13 would be desirable in the case of a cross-flow fan capable of high-speed rotation ( for example, 4000 rpm) used in an excimer laser device or fluoride laser device in which the repetition rate of the laser pulse is high because of the relation with the axial strength.

The above-mentioned problems are solved in the present invention based on aforementioned facts as follows.
(1) A rotating shaft piercing the center of a cross-flow fan is mounted in a cross-flow fan for a discharge excitation gas laser.
(2) A hollow section is provided within the rotating shaft in (1).
(3) When the outer diameter of the cross-flow fan in (1) and (2) is taken as D and the diameter of the rotating shaft is taken as d, the relationship would be d/D ≥ 0.13.

Alignment of the rotating shaft is facilitated by mounting a rotating shaft that pierces the cross-flow fan as in (1) above, and high-speed rotation is possible since the mechanical strength is high.

In addition, deformation due to weight of the shaft itself can be reduced since the rotating shaft weight can be reduced by providing a hollow section in the rotating shaft as in aforementioned (2). Accordingly, even higher speeds can be attained by a hollow rotating shaft that has a greater inherent oscillation frequency as compared to a solid rotating shaft.

Furthermore, the use of magnetic bearings becomes possible since the misalignment of the rotating shaft is reduced as a result of mounting the rotating shaft, and still higher speeds can be realized.

The inherent oscillation frequency of a cross-flow fan can be raised by setting d/D ≥ 0.13 as indicated in (3) above, and resonance can be eliminated even at maximum rotational speed exceeding 4000 rpm.

### Brief Description of Drawings

Figure 1 is a diagram showing the structure of a cross-flow fan in an embodiment of the present invention.

Figure 2 is a graph that shows the results of measuring the gas flow velocity relative to the speed of rotation of the cross-flow fan in the Figure 1 embodiment.

Figure 3 is a graph of the results of measuring the vertical vibration acceleration in the laser chamber relative to the speed of rotation of a cross-flow fan.

Figure 4 is a cross-sectional view of the hollow rotating shaft mounted in a cross-flow fan in the embodiment of the present invention.

Figure 5 is a perspective view showing another example of a hollow rotating shaft.

Figure 6 is diagram showing the basic structure of the chamber of an excimer laser device using magnetic bearings and a hollow rotating shaft.

Figures 7(a) & 7(b) are schematic diagrams that show the interior of a laser chamber of an excimer laser device in longitudinal and transverse sectional views, respectively.

Figure 8 is a cross-sectional view of a cross-flow fan housed in a casing, only a portion of which is shown.

Figure 9(a) and 9(b) are diagrams that show examples of misalignment of the rotating shaft of a cross-flow fan.

### Detailed Description of the Invention

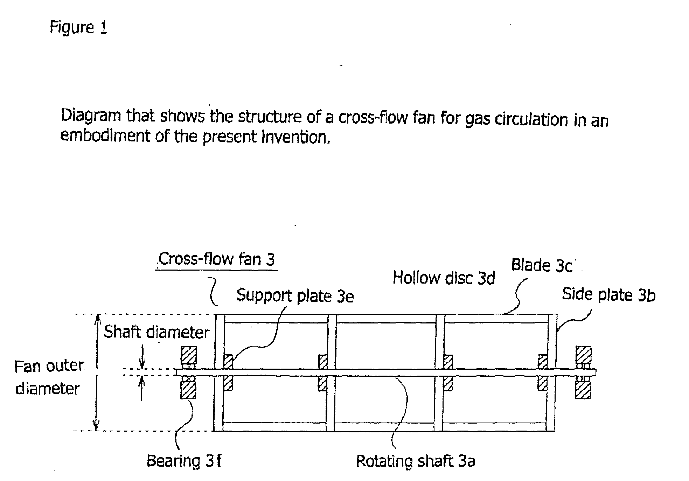

Figure 1 is a diagram that shows the structure of a cross-flow fan for gas circulation in an excimer laser device of one embodiment of the present invention in a cross-sectional view in the longitudinal direction of cross-flow fan 3.

Rotating shaft 3a pierces fan 3 in the cross-flow fan of this embodiment, as shown in the figure. Rotating shaft 3a is a column that is centered to high precision and worked. Side plate 3b and hollow discs 3d which support blade 3c are fixed to the rotating shaft 3a with support board 3e.

A cross-flow fan for gas circulation in an excimer laser device in which rotating shaft 3a pierces fan 3, as shown in Figure 1, was produced and its performance was compared with that of a conventional fan of similar size having a hollow interior.
Fans were produced which varied in terms of the outer diameter D and the diameter d of the rotating shaft, as shown in Table 1.

**Table 1**

| D (mm) | d(mm) | d/D |
|---|---|---|
| 120 | 23 | 0.19 |
| 150 | 30 | 0.20 |

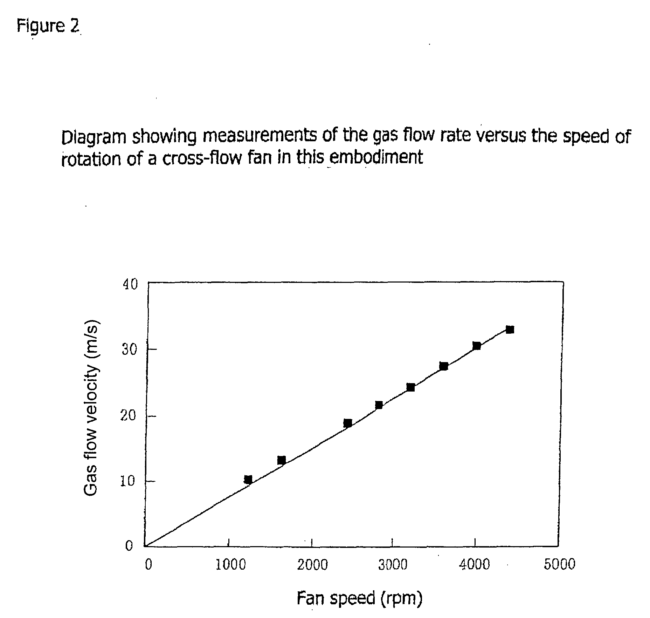

Figure 2 shows the gas flow velocity (m/s) versus the speed of rotation (rpm) in the case of a fan having a rotating shaft that pierces as shown in this embodiment and in which the diameter D = 120 mm and the diameter d = 23 mm (d/D = 0.19). The figure indicates the results of measuring the gas flow velocity within the laser chamber after mounting a cross-flow fan of 600 mm length in the axial direction within the laser chamber of the excimer laser device shown in Figure 7. The gas flow velocity at 4000 rpm was unchanged from that of a conventional fan.

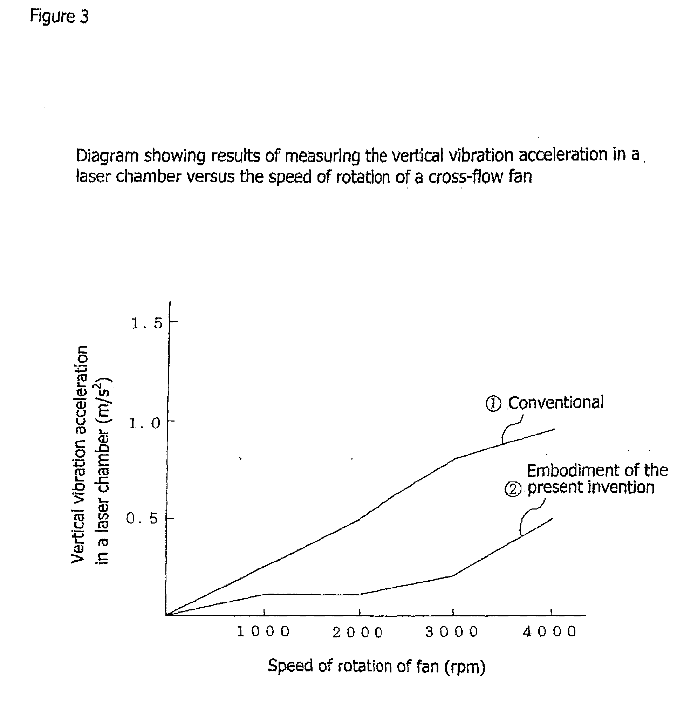

Furthermore, Figure 3 shows the magnitude of vibration of a laser chamber to which a fan is attached. In the diagram, the abscissa represents the speed of rotation (rpm) of the fan while the ordinate represents the vertical vibration acceleration (m/s²) within the chamber. The diagram shows the characteristics of a conventional fan (curve 1) that lacks a piercing rotating shaft and a fan of this embodiment that has a piercing rotating shaft (curve 2). The fan has diameters D = 120 mm and d = 23 mm with a 600 mm length in the axial direction. In addition, the conventional example was identical with this embodiment other than for the fact that the rotating shaft did not pierce the fan interior. As indicated by the results shown in Figure 3, the vibration acceleration could be reduced by about ½ as compared to the conventional example.
In the past, as explained above, no problem arises if d/D ≤ 0.07, taking rotating shaft diameter as d and fan outer diameter as D, when a rotating shaft is mounted within a cross-flow fan. Specifically, adverse effects result if d/D ≥ 0.07, but the gas flow velocity does not change from that of a conventional fan even if a central shaft of d/D = 0.19 is mounted in aforementioned embodiment under conditions of low flow velocity and high head as in a laser chamber.

Incidentally, the fan would vibrate greatly due to resonance if the speed of rotation of the cross-flow fan is consistent with the inherent oscillation frequency of the fan. Accordingly, the inherent oscillation frequency must be increased as much as possible relative to the maximum speed of rotation of the fan. In general, the speed of rotation of a fan should be under 70% of the speed corresponding to the inherent oscillation frequency.
The oscillation frequency corresponding to a 4000 rpm speed of rotation is about 67 Hz. Accordingly, if the maximum speed of rotation of a fan is 4000 rpm, the inherent oscillation frequency of the fan should exceed 95 Hz when the speed of rotation of a fan is assumed to be below 70% of the speed corresponding to the inherent oscillation frequency.

Thus, the diameter d of the rotating shaft was computed for the case in which the axial length of a cross-flow fan is equal to the electrode length of an excimer laser so that the inherent oscillation frequency would exceed 95 Hz. For example, the following would apply to maintain the inherent oscillation frequency above 95 Hz when the electrode length of an excimer laser is 600 mm and the material comprising the rotating shaft is stainless steel. Here, d is the diameter of the rotating shaft as above while D represents the outer diameter of the fan.
If the fan diameter is 120 mm.. d/D ≥ 0.16
If the fan diameter is 150 mm.. d/D ≥ 0.13
Specifically, the inherent oscillation frequency could be maintained above 95 Hz if d/D exceeds 0.13 even if the fan diameter is 150 mm.

The reasons that the efficiency and the air current do not decline as compared to a conventional fan even when using a cross-flow fan whose rotating shaft pierces the fan interior remain unclear. However, the following supposition is believed to be valid.

High pressure is imposed between narrow electrodes in an excimer laser device and air current is circulated. Specifically, the conditions of use of aforementioned cross-flow fan are high total pressure (high head) and low flow velocity. The conditions of use in an air-conditioner are the opposite of this, specifically, low head and high flow velocity.

When a cross-flow fan is used under high-head, low-flow-rate conditions, the magnitude of the swirling current creating the air current shown in Figure 8 would decrease as compared to use under low-head high-flow-rate conditions, and the position also would shift downward in the figure. The effects on swirling current formation would be slight even if the rotating shaft were within the fan.

Misalignment of the rotating shaft does not arise during fan assembly since a rotating shaft that pierces the interior of a cross-flow fan is mounted as noted above in this embodiment. Furthermore, the magnitude of the misalignment of the rotating shaft itself is dependent on the coaxiality of both ends of the shaft and on its straightness. The coaxiality and the straightness can be maintained by raising the precision of the conventional machining techniques. Accordingly, misalignment can be prevented. Furthermore, the mechanical strength of the fan can be adequately raised since the side plates or hollow discs that support the blades can be fixed to the rotating shaft.

The use of a solid shaft as the rotating shaft that pierces the cross-flow fan interior was explained in above embodiment; but, the speed of rotation of the fan can be raised still higher by "hollowing out the interior of the rotating shaft" and by "using magnetic bearings for the rotating shaft."

Embodiments in which (1) the interior of the rotating shaft is hollow and (2) magnetic bearings are used for the rotating shaft are explained below.

### (1) The interior of the rotating shaft is hollow

As indicated above, the inherent oscillation frequency of the fan should exceed 95 Hz when the maximum speed of rotation is 4000 rpm. The inherent oscillation frequency of the fan is dependent on the amount of deformation of the rotating shaft (due to its own weight), and the amount of deformation of the rotating shaft of the fan must be reduced to increase the inherent oscillation frequency. A rigid rotating shaft with little deformation must be used to reduce the amount of deformation. However, "rigid" means that the rotating shaft must be "thick" and "heavy." If the rotating shaft is "thick," the concern arises that the swirling current developing during ventilation would be greatly affected. Furthermore, if it is "heavy," the load on the bearings would increase and that would wear out the bearings sooner. Furthermore, the bearings would be enlarged and the overall device would also become larger. Thus, the weight is reduced by using a hollow rotating shaft in this embodiment. Weight reduction permits reduction of deformation due to weight.

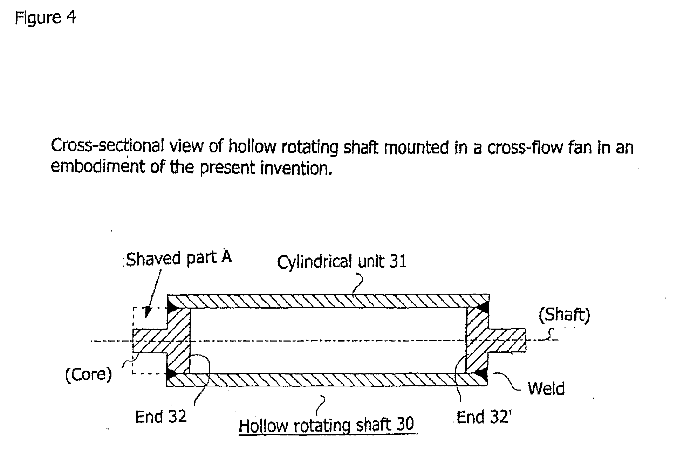

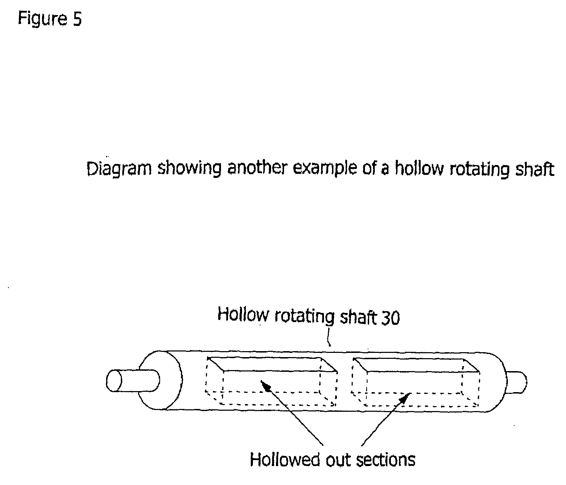

Figure 4 is a cross-sectional view of hollow rotating shaft 30. The shaft is formed of shaft units 32, 32' that are welded at both ends of a cylinder unit 31. The cylinder unit 31 is fixed to a lathe and the part A (represented by dash lines in the diagram) at both edges of the shaft are shaved off from shaft unit 32 while aligned.
The hollow shaft may be structured with a shaft that is partially hollowed out, as shown in Figure 5, to effect weight reduction. However, a suitable structure must be designed taking into consideration the relationship of the load that is applied since the mechanical strength of a hollow structure and of a shaft that has been hollowed out is lower than that of a solid shaft.

### (2) Magnetic bearings are used for the rotating shaft

Magnetic bearings cause the rotating shaft to float in the hollow cavity through magnetic repulsion in rotation. The use of magnetic bearings in the fan of an excimer laser device is presented, for example, in the gazette of Japanese Kokai Publication Hei-10-173259 and in U.S. Patent No. 5,848,089.

Magnetic bearings have no friction resistance as compared to conventional ball bearings and thus permit higher rotational speed. Since they are free from mechanical friction, they have a longer life as compared to roller bearings. However, since they do not mechanically push against the rotating shaft, the rotational balance of the fan would be destroyed, leading to vibration, if the shaft were even slightly misaligned. Accordingly, misalignment of the rotating shaft must be eliminated to permit the use of magnetic bearings for the rotating shaft of the fan.

Misalignment of the rotating shaft during manufacturing can be prevented and misalignment, even during high-speed rotation, can be prevented by using a cross-flow fan in which the rotating shaft pierces the interior as shown in Figures 1 & 4 of the embodiment of the present invention. Accordingly, the development of problems, including loss of rotational balance of the fan and attendant vibration, when using magnetic bearings can be reduced.

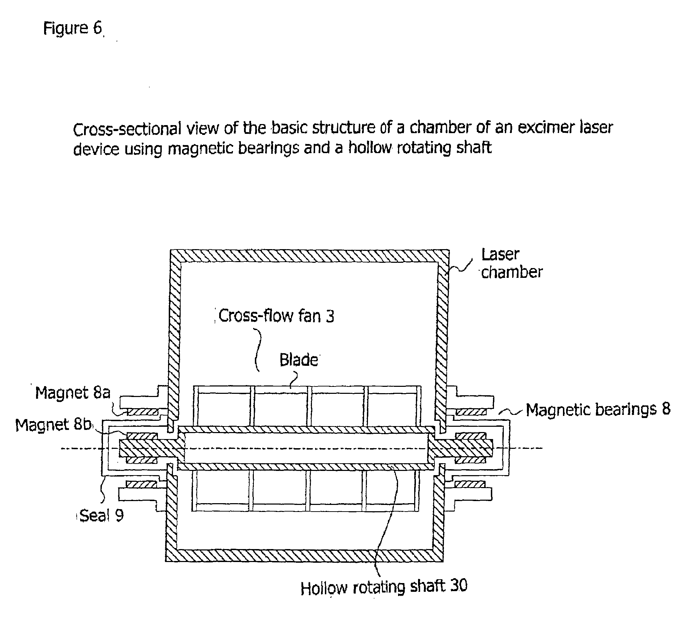

Figure 6 is a cross-sectional view of the basic structure when applying a cross-flow fan using magnetic bearings and a hollow rotating shaft that pierces the center to the chamber of an excimer laser device. In the figure, a laser chamber 1 has a cross-flow fan 3 mounted within it, and a hollow rotating shaft 30 pierces the interior of cross-flow fan 3. The hollow rotating shaft 30 is supported at both ends by magnetic bearings 8, and the magnetic bearings are sealed by seal unit 9. Magnetic bearings 8 float hollow rotating shaft 30 in the hollow cavity through the use of repulsion by magnet 8a and magnet 8b. The discharge electrodes and the cooling fin tubes, etc., are omitted in Figure 6.

The problem of loss of rotational balance by the fan and attendant vibration developing can be avoided, even if magnetic bearings are used, since hollow rotating shaft 30 pierces the interior of cross-flow fan 3 in the embodiment shown in Figure 6. Furthermore, the weight can be reduced and the bearing load can be lightened since the rotating shaft 30 is hollow. In addition, the inherent oscillation frequency can be raised through reduction of deformation attributable to weight. That permits the speed of rotation to be raised.
An example has been described which uses the cross-flow fan of this invention in an excimer laser device. However, the invention is not limited to this example and to an excimer laser device. It will be obvious to those skilled in the art that the cross-flow fan of the invention can also be used with any discharge excited gas laser device such as a fluoride laser device or the like.

### Effects of Invention

The present invention explained above has the following effects:
(1) Since a rotating shaft that pierces the interior of a cross-flow fan is mounted in a cross-flow fan used in excimer laser devices or fluoride laser devices, the fan can be assembled easily without misalignment of the rotating shaft; Furthermore, the flow velocity is not adversely affected even if the rotating shaft is mounted on a piercing shaft since the conditions of use of the cross-flow fan in an excimer laser device or fluoride laser device are high head and low flow velocity.
(2) The mechanical strength is high and the fan does not suffer deformation even at high-speed rotation since aforementioned rotating shaft is mounted. In addition, the fan can be assembled without misalignment and misalignment does not arise during high-speed rotation. Accordingly, the bearing load is reduced, bearing vibration is lowered, and neither deviation of the optical axis nor vibration of the central wavelength arise.
(3) Shaft deformation is reduced since the weight can be reduced by hollowing-out the rotating shaft. So the inherent oscillation frequency is raised and a high-speed rotation of the fan becomes possible.
(4) Misalignment of the rotating shaft does not arise during manufacture and during high-speed rotation. Accordingly, magnetic bearings can be employed for the rotating shaft and that permits still higher speed rotation.

## Claims

1. A cross-flow fan for a discharge excited gas laser to circulate laser gas between electrodes disposed within a laser chamber in which laser gas is circulated, wherein the rotating shaft of the cross-flow fan passes through the center of said fan.

2. The cross-flow fan for discharge excited gas laser of Claim 1 in which a hollow section is created within the rotating shaft.

3. The cross-flow fan for discharge excited gas laser of Claim 1 or Claim 2, in which the outer diameter of the cross-flow fan D and the outer diameter of the rotating shaft d are sized in accordance with the relationship d/D ≥ 0.13.
